# EUROPÄISCHE PATENTSCHRIFT

(11) **EP 3 385 144 B1**
(45) Veröffentlichungstag und Bekanntmachung des Hinweises auf die Patenterteilung: **06.09.2023**
(21) Anmeldenummer: 18158011.9
(22) Anmeldetag: 22.02.2018
(51) Int. Cl.: B62B 3/00, B62B 3/02, B62B 3/04, B62B 3/10, B62D 65/10, B62D 65/12, B62D 65/18

(54) **FAHRBARER TRANSPORTWAGEN ZUM TRANSPORT EINER FAHRZEUGACHSE**
MOBILE TRANSPORT TROLLEY FOR THE TRANSPORT OF A VEHICLE AXLE
CHARIOT TRANSPORTEUR MOBILE DESTINÉ AU TRANSPORT D'UN ESSIEU DE VÉHICULE

(30) Priorität: 03.03.2017 AT 792017
(43) Veröffentlichungstag der Anmeldung: 10.10.2018
(73) Patentinhaber: MAN Truck & Bus SE, 80995 München (DE)
(72) Erfinder: Herndler, Markus, 4592 Leonstein (AT); Ulverich, Michael, 85375 Neufahrn bei Freising (DE); Kraus, Philip, 85221 Dachau (DE)
(74) Vertreter: v. Bezold & Partner Patentanwälte - PartG mbB

(56) Entgegenhaltungen:
- WO-A1-01/65007
- DE-T5-112015 000 150
- GB-A- 2 373 765
- JP-A- H06 115 426
- US-A1- 2005 232 729
- US-B1- 6 308 404

## Beschreibung

Die Erfindung betrifft einen fahrbaren Transportwagen zum Transport einer Fahrzeugachse nach Patentanspruch 1 sowie ein Verfahren zur Montage eines Fahrzeugs, insbesondere eines Nutzfahrzeugs, nach Patentanspruch 16.

Zur Montage von Fahrzeugachsen bzw. Radachsen an einem Fahrgestellrahmen bzw. an einem Chassis eines Nutzfahrzeugs, insbesondere eines Lastkraftwagens oder eines Busses, ist es bekannt, den Fahrgestellrahmen rücklings anzuordnen. Die Fahrzeugachsen werden dann mittels einer Halteeinrichtung, beispielsweise mittels eines Krans, oberhalb des rücklings angeordneten Fahrgestellrahmens gehaltert bzw. angeordnet und an den Fahrgestellrahmen montiert. Die Anordnung des Fahrgestellrahmens rücklings sowie die Halterung der Fahrzeugachsen mittels der Halteeinrichtung oberhalb des Fahrgestellrahmens ist jedoch anlagentechnisch aufwändig. Zudem werden die Fahrzeugachsen bei einer derartigen Montage üblicherweise nacheinander bzw. nicht gleichzeitig an den Fahrgestellrahmen montiert, wodurch diese Art der Montage auch zeitaufwendig ist.

Das Dokument US 2005 0232 729 A1 beschreibt ein Fahrzeug mit einer rotierbaren Plattform zur Aufnahme einer Last. Die Plattform ist dabei ausgebildet, einen Fahrzeugrahmen aufzunehmen und diesen mittels eines Drehmechanismus entlang der Fahrzeughochachse manuell oder automatisch zu verschwenken. Die offenbarte Lösung birgt den Nachteil, dass, abgesehen von der Verdrehung um die Fahrzeughochachse, keine weitergehende räumliche Positionierung der Last zu Montagezwecken erfolgen kann.

Aufgabe der Erfindung ist es, die Montage der Fahrzeugachsen zu vereinfachen und die Montagezeit bzw. die Durchlaufzeit zur Montage der Fahrzeugachsen zu verringern.

Diese Aufgabe wird durch die Merkmale der unabhängigen Ansprüche gelöst. Bevorzugte Weiterbildungen sind in den Unteransprüchen offenbart.

Gemäß Patentanspruch 1 wird ein fahrbarer Transportwagen zum Transport einer Fahrzeugachse, insbesondere einer Nutzfahrzeugachse, vorgeschlagen, mit einer Achsaufnahme zur Aufnahme der Fahrzeugachse, und mit einer Betätigungseinrichtung bzw. Antriebseinrichtung, mittels der die aufgenommene Fahrzeugachse relativ zu einem wenigstens eine, vorzugsweise mehrere, Fahrrolle aufweisenden Basisrahmen des Transportwagens in Transportwagen-Hochrichtung verlagert und/oder relativ zu dem Basisrahmen des Transportwagens um wenigstens eine Drehachse, insbesondere um eine in Transportwagen-Querrichtung verlaufende Querachse und/oder um eine in Transportwagen-Längsrichtung verlaufende Längsachse, verdreht werden kann.

Auf diese Weise wird die Montage der Fahrzeugachse deutlich vereinfacht, da die Fahrzeugachse nun mittels des Transportwagens transportiert und in Transportwagen-Hochrichtung bzw. in Vertikalrichtung verlagert und/oder um wenigstens eine Drehachse gedreht werden kann. So kann beispielsweise eine sich in einem Ausgangszustand, insbesondere in einem Anlieferungszustand, befindliche Fahrzeugachse auf dem Transportwagen platziert werden und mittels des Transportwagens durch das Montagewerk zur Montage der Fahrzeugachse gefahren werden. Die in dem ausgangszustand befindliche Fahrzeugachse kann dann beispielsweise zu einer ersten Montagestation bzw. zu einem ersten Montagebereich des Montagewerks gefahren werden, an dem Anbauteile, wie beispielsweise Federn, Luftfederbälge, Stabilisatoren oder Federbügel an die Achse montiert werden. Durch die erfindungsgemäße Höhenverstellbarkeit bzw. Verdrehbarkeit der auf dem Transportwagen platzierten Fahrzeugachse wird die Montage dieser Anbauteile dabei deutlich vereinfacht, da der Werker bzw. Monteur die Fahrzeugachse dadurch so platzieren kann, dass er die Anbauteile in einer ergonomisch günstigen Position montieren kann. Dadurch wird auch die benötigte Montagezeit zur Montage dieser Anbauteile deutlich verringert.

Anschließend kann die derart vormontierte Fahrzeugachse dann mittels des Transportwagens zu einer zweiten Montagestation bzw. zu einem zweiten Montagebereich des Montagewerks gefahren werden, in dem die Fahrzeugachse von unten an einem in Fahrlage angeordneten Fahrgestellrahmen montiert wird. Durch die erfindungsgemäße Höhenverstellbarkeit bzw. Verdrehbarkeit der auf dem Transportwagen platzierten Fahrzeugachse kann die Fahrzeugachse dabei besonders einfach und effektiv an den Fahrgestellrahmen montiert werden, da der Werker die Fahrzeugachse nun derart relativ zu dem ortsfest gehalterten Fahrgestellrahmen anordnen kann, dass er die Fahrzeugachse ergonomisch günstig an den Fahrgestellrahmen montieren kann. Durch die variable Anordenbarkeit der Fahrzeugachse relativ zu dem Fahrgestellrahmen können dabei auch Fertigungstoleranzen des Fahrgestellrahmens oder der vormontierten Fahrzeugachse problemlos ausgeglichen werden. Zudem können mit mehreren Transportwagen auch mehrere vormontierte Fahrzeugachsen gleichzeitig an den Fahrgestellrahmen montiert werden.

Bevorzugt liegt die Hubhöhe, um die die auf dem Transportwagen platzierte Fahrzeugachse insgesamt, das heißt ohne Verschwenkung oder Verdrehung, relativ zu dem Basisrahmen des Transportwagens in Transportwagen-Hochrichtung verlagert werden kann, in einem Bereich von 800mm bis 1700mm.

In einer bevorzugten Ausgestaltung des erfindungsgemäßen Transportwagens kann die aufgenommene Fahrzeugachse mittels der Betätigungseinrichtung axial verdreht bzw. gedreht werden. So werden die Vormontage der Fahrzeugachse und die Montage der Fahrzeugachse an den Fahrgestellrahmen deutlich vereinfacht.

Erfindungsgemäß weist die Achsaufnahme einen ersten Aufnahmekörper zur Aufnahme einer ersten Radnabe der Fahrzeugachse und einen, insbesondere in Transportwagen-Querrichtung von dem ersten Aufnahmekörper beabstandeten, zweiten Aufnahmekörper zur Aufnahme einer zweiten Radnabe der Fahrzeugachse auf. Auf diese Weise kann die Fahrzeugachse einfach und effektiv mittels des Transportwagens aufgenommen werden.

Gemäß einer ersten erfindungsgemäßen Variante weist jeder Aufnahmekörper mehrere, insbesondere zwei, axial drehbar festgelegte Rollen auf, auf denen die jeweilige Radnabe mit einem daran festgelegten, insbesondere einen definierten Außendurchmesser aufweisenden, scheibenförmigen Adapterelement abgelegt und/oder abgesetzt werden kann, insbesondere dergestalt, dass sich bei einer axialen Drehung der auf den Rollen abgelegten Fahrzeugachse die Rollen mitdrehen. So kann die Fahrzeugachse einfach und effektiv mittels des Transportwagens aufgenommen werden. Das jeweilige scheibenförmige, insbesondere ringförmige, Adapterelement kann dabei beispielsweise über durch einen Lochkreis der jeweiligen Radnabe gebildete Gewindebohrung mit der jeweiligen Radnabe verbunden sein.

Vorteilhaft ist es, wenn jede Rolle eine umlaufende Ausnehmung, insbesondere eine umlaufende Nut, aufweist, in der das jeweilige scheibenförmige Adapterelement mit einem Scheibenrandbereich angeordnet werden kann, um einer Verlagerung der auf den Rollen abgelegten Fahrzeugachse in Axialrichtung relativ zu dem Transportwagen entgegenzuwirken. Für eine besonders effektive Halterung bzw. Fixierung der Fahrzeugachse ist diese umlaufende Ausnehmung in Rollen-Axialrichtung beidseitig von radial abragenden, insbesondere ringförmigen, Stegen begrenzt.

Vorteilhaft ist es weiter, wenn der zweite Aufnahmekörper wenigstens einen ausfahrbaren Steckbolzen als Verdrehsicherung für die auf den Rollen abgelegte Fahrzeugachse aufweist, der, insbesondere mit einem definierten Spaltabstand, in eine korrespondierende Ausnehmung eines der Adapterelemente der Fahrzeugachse eingesteckt und/oder eingeführt werden kann. So wird einer ungewollten Verdrehung der auf den Rollen abgelegten Achse effektiv entgegengewirkt. Der Steckbolzen kann dabei beispielsweise mittels einer durch eine Person, insbesondere manuell, betätigbaren Betätigungseinrichtung ausgefahren und eingefahren werden.

In einer bevorzugten konkreten Ausgestaltung ist dem ersten Aufnahmekörper eine Drehbetätigungseinrichtung zugeordnet, mittels der die auf den Rollen abgelegten Fahrzeugachse axial gedreht werden kann. So kann die Fahrzeugachse baulich einfach axial verdreht werden. Bevorzugt ist dabei vorgesehen, dass die Drehbetätigungseinrichtung Bestandteil eines Y-Schlittenelements des Transportwagens ist, das mittels einer Fixiereinrichtung relativ zu dem ersten Aufnahmekörper in Transportwagen-Querrichtung verlagerbar an den ersten Aufnahmekörper festgelegt ist. Über ein derartiges Y-Schlittenelement kann die auf den Rollen abgelegte Fahrzeugachse besonders einfach mit der Drehbetätigungseinrichtung gekoppelt und von der Drehbetätigungseinrichtung entkoppelt werden. Für einen besonders einfachen und effektiven Aufbau ist die Fixiereinrichtung dabei durch mehrere in Transportwagen-Querrichtung ausgerichtete Führungsstäbe gebildet, mittels denen das Y-Schlittenelement relativ zu dem ersten Aufnahmekörper in Transportwagen-Querrichtung verlagerbar geführt ist. Bevorzugt weist das Y-Schlittenelement wenigstens einen ausfahrbaren Sicherungsstift bzw. Befestigungsstift zur Festlegung des Y-Schlittenelements in wenigstens einer definierten Y-Position relativ zu dem ersten Aufnahmekörper auf, der, insbesondere mit einem definierten Spaltabstand, in wenigstens eine korrespondierende Ausnehmung des ersten Aufnahmekörpers eingesteckt und/oder eingeführt werden kann.

Vorzugsweise weist die Drehbetätigungseinrichtung ein drehantreibbares, insbesondere gabelartiges, Steckelement mit mehreren, insbesondere zwei, abragenden Steckarmen auf, die zur Herstellung einer drehmomentübertragenden Verbindung zwischen dem Steckelement und der auf den Rollen abgelegten Fahrzeugachse, insbesondere mit einem definierten Spaltabstand, in korrespondierende Ausnehmungen eines der Adapterelemente der Fahrzeugachse eingesteckt und/oder eingeführt werden können. So kann die drehmomentübertragende Verbindung zwischen der Drehbetätigungseinrichtung und der auf den Rollen abgelegten Fahrzeugachse einfach und effektiv hergestellt und gelöst werden.

Für einen einfachen und effektiven Aufbau kann das Steckelement einen im Wesentlichen U-förmigen Steckbereich aufweisen, wobei jeder U-Schenkel des U-förmigen Steckbereichs einen abragenden Steckarm des Steckelements ausbildet. Vorzugsweise ist das Steckelement dabei insgesamt im Wesentlichen Y-förmig ausgebildet.

Vorzugsweise weist die Drehbetätigungseinrichtung weiter ein, insbesondere stabförmiges und/oder axial drehbar festgelegtes, drehmomentübertragend mit dem Steckelement verbundenes Dreh-Betätigungselement auf, mittels dem das Steckelement drehangetrieben werden kann. Bevorzugt ist dabei vorgesehen, dass das Dreh-Betätigungselement unter Zwischenschaltung eines Schneckengetriebes mit dem Steckelement gekoppelt ist. Über das zwischengeschaltete Schneckengetriebes kann die auf den Rollen abgelegte Fahrzeugachse mit einem besonders geringen Drehmoment axial gedreht werden. Zudem bildet das Schneckengetriebe eine Verdrehsicherung aus, mittels der einer ungewollten Verdrehung der auf den Rollen abgelegten Fahrzeugachse effektiv entgegenwirkt wird.

Gemäß einer zweiten erfindungsgemäßen Variante ist der erste Aufnahmekörper mittels einer ersten Fixiereinrichtung relativ zu dem Basisrahmen des Transportwagens in Transportwagen-Hochrichtung verlagerbar an dem Basisrahmen festgelegt. Der zweite Aufnahmekörper ist dabei mittels einer zweiten Fixiereinrichtung relativ zu dem Basisrahmen des Transportwagens in Transportwagen-Hochrichtung verlagerbar an dem Basisrahmen festgelegt. Bevorzugt ist dabei vorgesehen, dass die jeweilige Fixiereinrichtung mehrere, insbesondere zwei, dem Basisrahmen zugeordnete Führungsschienen aufweist, mittels denen der jeweilige Aufnahmekörper relativ zu dem Basisrahmen in Transportwagen-Hochrichtung verlagerbar geführt ist. So kann der jeweilige Aufnahmekörper einfach und zuverlässig in Transportwagen-Hochrichtung bzw. in Vertikalrichtung verlagert werden.

Vorteilhaft ist es weiter, wenn der zweite Aufnahmekörper mittels eines Stützkörpers in Transportwagen-Hochrichtung nach unten abgestützt ist, wobei der Stützkörper mittels einer Fixiereinrichtung relativ zu dem Basisrahmen des Transportwagens in Transportwagen-Hochrichtung verlagerbar an dem Basisrahmen festgelegt ist, und wobei der Abstand bzw. Vertikalabstand zwischen dem zweiten Aufnahmekörper und dem Stützkörper in Transportwagen-Hochrichtung mittels einer Betätigungseinrichtung eingestellt werden kann. Durch diese Einstellbarkeit des Vertikalabstands zwischen dem zweiten Aufnahmekörper und dem Stützkörper ist es möglich, die aufgenommene Fahrzeugachse in einem definierten Maß um eine in Transportwagen-Längsrichtung verlaufende Längsachse zu drehen bzw. zu schwenken. Dadurch wird die Montage der Fahrzeugachse an dem Fahrgestellrahmen weiter vereinfacht. Bevorzugt beträgt die Hubhöhe, die der zweite Aufnahmekörper relativ zu dem Stützkörper in Transportwagen-Hochrichtung bzw. in Vertikalrichtung verlagert werden kann, dabei 40 bis 60 mm, besonders bevorzugt in etwa 50 mm.

Weiter bevorzugt können der erste Aufnahmekörper und der Stützkörper jeweils mittels eines Spindeltriebs relativ zu dem Basisrahmen des Montagewagens in Transportwagen-Hochrichtung verlagert werden, wobei dem ersten Aufnahmekörper und dem Stützkörper eine Spindelmutter des jeweiligen Spindeltriebs zugeordnet ist. So können der erste Aufnahmekörper und der Stützkörper einfach und funktionssicher relativ zu dem Basisrahmen des Transportwagens in Transportwagen-Hochrichtung verlagert werden. Bevorzugt ist dabei vorgesehen, dass die Spindeln dieser Spindeltriebe drehmomentübertragend mit einem einzigen, insbesondere stabförmigen und/oder axial drehbar festgelegten, Z-Betätigungselement verbunden sind, mittels dem die Spindeln drehantreibbar sind.

Gemäß einer dritten erfindungsgemäßen Variante ist eine Betätigungseinrichtung vorgesehen, mittels der der Abstand der Aufnahmekörper zueinander in Transportwagen-Querrichtung eingestellt bzw. verstellt werden kann. Auf diese Weise ist der Transportwagen besonders flexibel, da nun Fahrzeugachsen mit unterschiedlichen Achsbreiten von dem Transportwagen aufgenommen werden können.

Gemäß einer vierten erfindungsgemäßen Variante ist der erste Aufnahmekörper des Transportwagens einem ersten Y-Schlittenelement des Basisrahmens zugeordnet, das mittels einer ersten Verbindungseinrichtung relativ zu einem Trägerkörper des Basisrahmens in Transportwagen-Querrichtung verlagerbar mit dem Trägerkörper verbunden ist. Zudem ist dabei auch der zweite Aufnahmekörper einem zweiten Y-Schlittenelement des Basisrahmens zugeordnet, das mittels einer zweiten Verbindungseinrichtung relativ zu dem Trägerkörper in Montagewagen-Querrichtung verlagerbar mit dem Trägerkörper verbunden ist. So kann der Abstand zwischen den Aufnahmekörpern in Transportwagen-Querrichtung einfach und effektiv eingestellt werden. Bevorzugt ist dem Trägerkörper des Basisrahmens dabei wenigstens ein Führungsstift zugeordnet, mittels dem der Transportwagen in einer bodenseitigen Führungsnut geführt werden kann. So kann der Transportwagen einfach und zuverlässig auf einer definierten Fahrstrecke durch ein Montagewerk gefahren bzw. geschoben werden.

Bevorzugt ist das Z-Betätigungselement einem der Y-Schlittenelemente des Basisrahmens zugeordnet. Die dem anderem Y-Schlittenelement des Basisrahmens zugeordnete Spindel ist dann vorzugsweise über wenigstens eine Welle-Nabe-Verbindung drehmomentübertragend mit dem Z-Betätigungselement verbunden, wobei bei dieser Welle-Nabe-Verbindung das Wellenelement und das Nabenelement relativ zueinander axial verschoben werden können. So können die Höhenverstellbarkeit der Aufnahmekörper und die Verstellung des Abstands zwischen den Aufnahmekörpern in Transportwagen-Querrichtung in Verbindung mit einem einzigen Z-Betätigungselement zum Drehantreiben der Spindeln der Spindeltriebe einfach und effektiv realisiert werden. Die Welle-Nabe-Verbindung kann dabei beispielsweise durch eine Keilwellenverbindung oder durch eine Zahnwellenverbindung gebildet sein.

Bevorzugt ist es weiter, wenn das erste Y-Schlittenelement mittels eines Spindeltriebs relativ zu dem Trägerkörper in Transportwagen-Querrichtung verlagert werden kann. So kann der Abstand der Aufnahmekörper in Transportwagen-Querrichtung einfach und effektiv eingestellt werden. Bevorzugt ist dabei vorgesehen, dass die Spindel dieses Spindeltriebs mittels eines, insbesondere stabförmigen und/oder axial drehbar festgelegten, drehmomentübertragend mit der Spindel verbundenen Y-Betätigungselements drehangetrieben werden kann.

Vorzugsweise sind die Y-Schlittenelemente mittels einer Kopplungseinrichtung miteinander bewegungsgekoppelt, dergestalt, dass sich bei einer Verlagerung des ersten Y-Schlittenelements weg von dem Trägerkörper das zweite Y-Schlittenelement ebenfalls von dem Trägerkörper weg verlagert, und dass sich bei einer Verlagerung des ersten Y-Schlittenelements hin zu dem Trägerkörper das zweite Y-Schlittenelement ebenfalls hin zu dem Trägerkörper verlagert. So kann der Abstand zwischen den Aufnahmekörpern in Transportwagen-Querrichtung funktionsoptimiert und besonders schnell wie gewünscht eingestellt werden. Bevorzugt ist dabei vorgesehen, dass die Kopplungseinrichtung durch einen Zahnstangentrieb gebildet ist. Für einen einfachen und effektiven Aufbau kann dabei beispielsweise jedem Y-Schlittenelement eine Zahnstange des Zahnstangentriebs zugeordnet sein, wobei diese Zahnstangen dann mit einem axial drehbar an dem Trägerkörper festgelegten Stirnrad des Zahnstangentriebs in Zahneingriff sind.

Vorteilhaft ist es weiter, wenn das Dreh-Betätigungselement und/oder das Z-Betätigungselement und/oder das Y-Betätigungselement einen Steckbereich mit einem Antriebsprofil aufweist, an den ein Druckluftschrauber angesteckt werden, dergestalt, dass das jeweilige Betätigungselement mittels des angesteckten Druckluftschraubers drehbetätigt werden kann. Über einen Druckluftschrauber kann das jeweilige Betätigungselement einfach und effektiv drehbetätigt werden. Zudem ist an einem Montagewerk üblicherweise bereits ein Druckluftsystem vorhanden, so dass an einem derartigen Montagewerk keine bzw. nur geringe Anpassungen vorzunehmen sind, um den erfindungsgemäßen Transportwagen einsetzen zu können. Durch die Verwendung von Druckluft zur Betätigung bzw. zum Antrieb des jeweiligen Betätigungselements ist der Transportwagen dabei stets einsatzbereit. Alternativ zu einer Drehbetätigung mittels eines Druckluftschraubers könnte das jeweilige Betätigungselement aber auch mittels wenigstens eines dem Montagewagen zugeordneten Motors, insbesondere Elektromotors, oder aber auch durch manuelle Betätigung, beispielsweise mittels einer Kurbel, drehbetätigt werden.

Weiter bevorzugt ist es, wenn das Dreh-Betätigungselement, das Z-Betätigungselement und das Y-Betätigungselement einem der Y-Schlittenelemente des Basisrahmens, insbesondere dem ersten Y-Schlittenelement des Basisrahmens, zugeordnet sind, um die Betätigung des Transportwagens zu vereinfachen.

Zur Lösung der bereits genannten Aufgabe wird ferner ein Verfahren zur Montage eines Fahrzeugs, insbesondere eines Nutfahrzeugs, mittels des erfindungsgemäßen fahrbaren Transportwagens beansprucht, wobei zunächst eine sich in einem Ausgangszustand, insbesondere in einem Anlieferzustand, befindliche Fahrzeugachse auf dem Transportwagen abgelegt wird, wobei anschließend in einer ersten Montagestation die abgelegte Fahrzeugachse mittels der Betätigungseinrichtung des Transportwagens in wenigstens eine, insbesondere in mehrere, definierte Axial-Drehposition axial gedreht und wenigstens ein Anbauteil an die in der jeweiligen Axial-Drehposition angeordnete Fahrzeugachse montiert wird, und wobei die derart vormontierte Fahrzeugachse dann mittels des Transportwagens hin zu einer zweiten Montagestation gefahren wird, in der die auf den Transportwagen abgelegte Fahrzeugachse an einen in Fahrlage angeordneten Fahrgestellrahmen des Fahrzeugs montiert wird.

Auf diese Weise kann die Fahrzeugachse einfach und effektiv vormontiert und im vormontierten Zustands an einen Fahrgestellrahmen des Fahrzeugs montiert werden. Die Anbauteile können dabei beispielsweise durch Federn, Luftfederbeläge, Stabilisatoren oder durch Federbügel gebildet sein.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Figur 1: in einer Perspektivdarstellung einen erfindungsgemäßen fahrbaren Transportwagen;
- Figur 2: in einer schematischen Darstellung eine mittels des Transportwagens aufnehmbare Fahrzeugachse mit daran montierten Adapterelementen;
- Figur 3: eine Draufsicht auf das jeweilige Adapterelement;
- Figur 4: in einer Ansicht von oben den Transportwagen; und
- Figur 5: in einer Seitenansicht den Transportwagen.

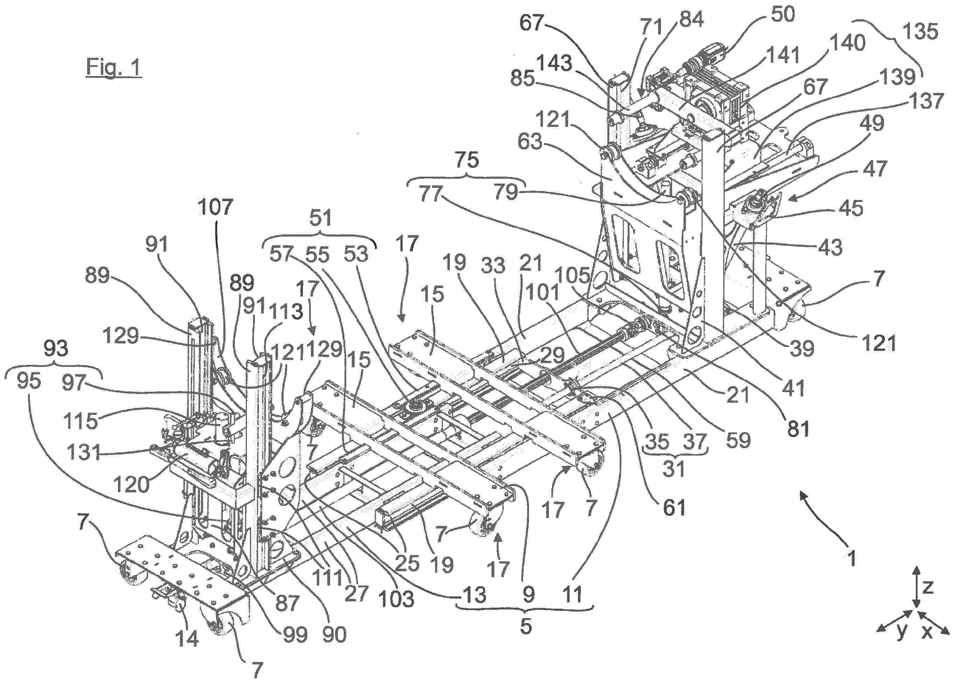

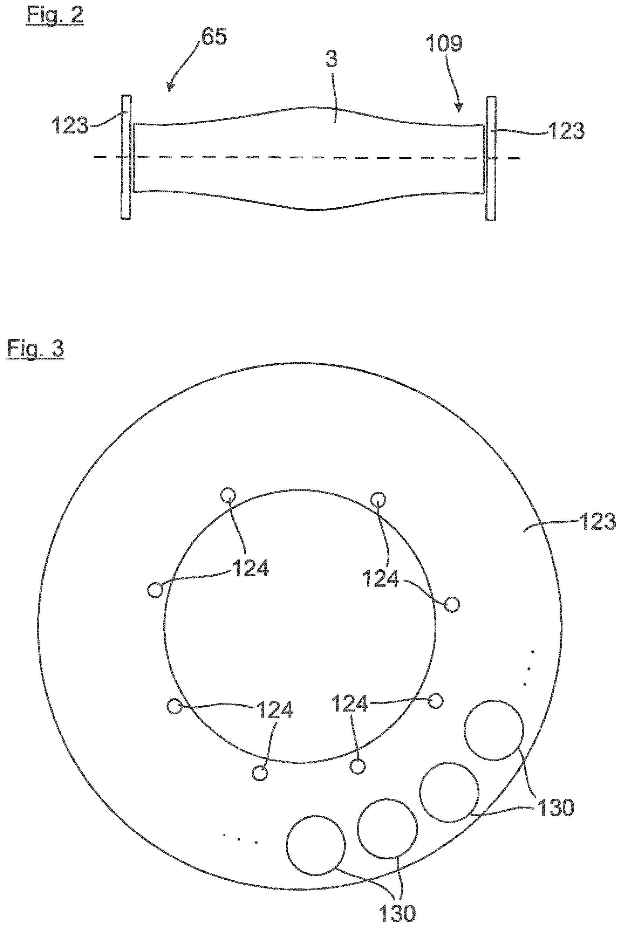

In Figur 1 ist erfindungsgemäßer fahrbarer Transportwagen 1 zum Transport einer Fahrzeugachse 3 (Figur 2) in Perspektivdarstellung gezeigt. Der Transportwagen 1 weist einen Basisrahmen 5 mit mehreren Fahrrollen 7 auf. Mittels dieser Fahrrollen 7 kann der Transportwagen 1 von einem Werker durch ein Montagewerk gefahren bzw. geschoben werden.

Konkret sind hier beispielhaft einem zentralen Trägerkörper 9 des Basisrahmens 5 vier Fahrrollen 7 zugeordnet. Zudem sind hier einem ersten Y-Schlittenelement 11 des Basisrahmens 5 und einem zweiten Y-Schlittenelement 13 des Basisrahmens 5 jeweils zwei Fahrrollen 7 zugeordnet. Die Fahrrollen 7 sind hier schwenkbar an dem Transportwagen 1 festgelegt, so dass der Transportwagen 1 in alle Richtungen fahren kann. Zudem weist jedes Y-Schlittenelement 11, 13 hier beispielhaft einen Stopper bzw. Boden-Feststeller 14 auf.

Das zentrale Trägerkörper 9 des Basisrahmens 5 weist hier beispielhaft zwei in Transportwagen-Längsrichtung x ausgerichtete, in Transportwagen-Querrichtung voneinander beabstandete Trägerschienen 15 auf. Diese parallel zueinander ausgerichteten Trägerschienen 15 ragen hier jeweils mit ihren Endbereichen 17 in Transportwagen-Längsrichtung x beidseitig, das heißt nach vorne und nach hinten, von dem Transportwagen 1 ab. Dabei ist hier an jedem Endbereich 17 der jeweiligen Trägerschiene 15 jeweils eine Fahrrolle 7 angeordnet. Dadurch wird einem Kippen bzw. Schaukeln des Transportwagens 1 nach vorne oder nach hinten effektiv entgegengewirkt und ein sicherer Stand des Transportwagens 1 erreicht.

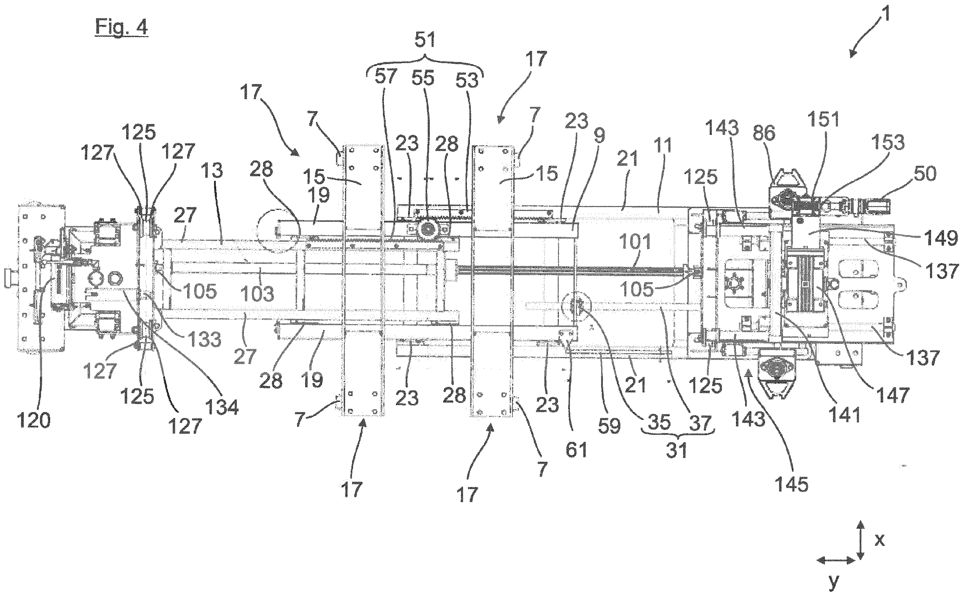

Gemäß Figur 1 und Figur 4 weist der Trägerkörper 9 hier weiter zwei in Transportwagen-Querrichtung y ausgerichtete und in Transportwagen-Längsrichtung x voneinander beabstandete Führungsschienen 19 auf, die starr bzw. unbeweglich an den Trägerschienen 15 des Trägerkörpers 9 festgelegt sind. Mittels der parallel zueinander angeordneten Führungsschienen 19 des Trägerkörpers 9 werden das erste Y-Schlittenelement 11 und das Y-Schlittenelement 13 des Basisrahmens 5 relativ zu dem Trägerkörper 9 in Transportwagen-Querrichtung y verlagerbar geführt.

Hierzu sind hier beispielhaft an zwei ebenfalls in Transportwagen-Querrichtung y ausgerichteten, in Transportwagen-Längsrichtung x voneinander beabstandeten Trägerschienen 21 des ersten Y-Schlittenelements 11 jeweils zwei in Transportwagen-Querrichtung y voneinander beabstandete, in Transportwagen-Längsrichtung x nach außen abragende Führungselemente 23 starr bzw. unbeweglich befestigt. Die beiden Führungselemente 23 der jeweiligen Trägerschiene 21 ragen dabei in, in Transportwagen-Längsrichtung x innenseitige Vertiefungen 25 der jeweiligen Führungsschiene 19 des Trägerkörpers 9 ein. Zudem sind hier auch an zwei in Transportwagen-Querrichtung y ausgerichteten, in Transportwagen-Längsrichtung voneinander beabstandeten Trägerschienen 27 des zweiten Y-Schlittenelements jeweils zwei in Transportwagen-Querrichtung y voneinander beabstandete und nach innen abragende Führungselemente 28 starr bzw. unbeweglich festgelegt, die in außenseitige Vertiefungen 29 der Führungsschienen 19 einragen.

Des Weiteren kann das erste Y-Schlittenelement 11 des Basisrahmens 5 hier mittels eines Spindeltriebs 31 relativ zu dem Trägerkörper 9 des Basisrahmens 5 in Transportwagen-Querrichtung y verlagert werden. Dabei ist hier an einer mit den Führungsschienen 19 des Trägerkörpers 9 starr verbundenen Aufnahmeplatte 33 des Trägerkörpers 9 eine Spindelmutter 35 des Spindeltriebs 31 festgelegt, die mit einer hier in Transportwagen-Querrichtung y ausgerichteten Spindel 37 des Spindeltriebs 31 in Eingriff ist. Diese Spindel 37 ist hier axial drehbar an dem ersten Y-Schlittenelement 11 des Basisrahmens 5 festgelegt.

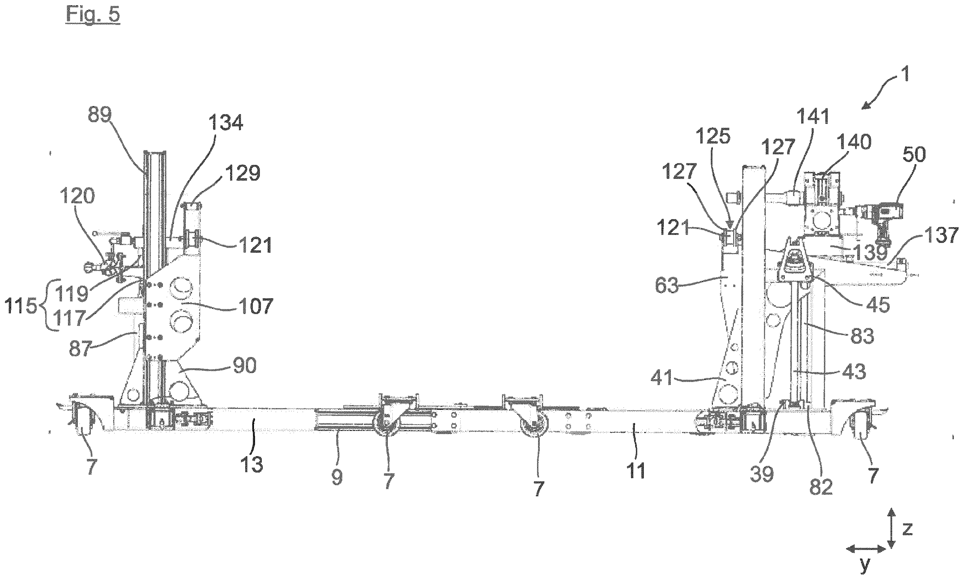

Die Spindel 37 bildet eine Ausgangswelle eines Winkelgetriebes 39 (Figur 5) des ersten Y-Schlittenelements 11 aus. Über das Winkelgetriebe 39 ist die Spindel 37 drehmomentübertragend mit einer ausgehend vom Winkelgetriebe 39 schräg nach oben sowie nach außen geführten Welle 43 (Fig. 1) verbunden. Die Welle 43 ist an einer in Transportwagen-Längsrichtung x nach außen abragenden Konsole 45 eines Trägergestells 41 des Y-Schlittenelements 11 axial drehbar gehaltert und weist an einem freien Ende 47 einen Steckbereich 49 mit einem Antriebsprofil auf. An diesen Steckbereich 49 kann ein Druckluftschrauber 50 angesteckt werden, so dass die Welle 43 mittels des Druckluftschraubers drehbetätigt werden kann. Durch Drehbetätigung der Welle 43 wird die Spindel 37 des Spindeltriebs 31 drehangetrieben. Dies bewirkt dann eine Verlagerung des ersten Y-Schlittenelements 11 relativ zu dem Trägerkörper 9 des Transportwagens 1. Die Welle 43 bildet hier somit ein Y-Betätigungselement aus, durch dessen Betätigung das erste Y-Schlittenelement 11 relativ zu dem Trägerkörper 9 in Transportwagen-Querrichtung y verlagert wird.

Weiter sind die Y-Schlittenelemente 11, 13 hier derart mittels einer Kopplungseinrichtung 51 miteinander bewegungsgekoppelt, das sich bei einer Verlagerung des ersten Y-Schlittenelements 11 weg von dem Trägerkörper 9 das zweite Y-Schlittenelement 13 ebenfalls von dem Trägerkörper 9 weg verlagert und umgekehrt. Die Kopplungseinrichtung 51 ist hier beispielhaft durch einen Zahnstangentrieb gebildet. Konkret weist die Kopplungseinrichtung 51 hier beispielhaft eine starr an einer der Trägerschienen 21 des ersten Y-Schlittenelements 11 festgelegte, in Transportwagen-Querrichtung y ausgerichtete Zahnstange 53 auf, die mit einem axial drehbar an dem Trägerkörper 9 des Transportwagens 1 festgelegten Stirnrad 55 in Zahneingriff ist. Zudem weist die Kopplungseinrichtung 51 hier auch eine an einer der Trägerschienen 27 des zweiten Y-Schlittenelements 13 starr festgelegte, in Transportwagen-Querrichtung y ausgerichtete Zahnstange 57 auf, die ebenfalls in Zahneingriff mit dem Stirnrad 55 des Trägerkörpers 9 ist.

Gemäß Figur 4 weist hier zudem eine der Trägerschienen 21 des ersten Y-Schlittenelements 11 einen Maßstab bzw. eine Linearskala auf, die mit einem, einer der Führungsschienen 19 des Trägerkörpers 9 zugeordneten Zeiger 61 zusammenwirkt. Über die Linearskala 59 und dem Zeiger 61 kann somit der Abstand der Y-Schlittenelemente 11, 13 in Transportwagen-Querrichtung y definiert eingestellt werden.

Wie weiter in Figur 1 und Figur 5 gezeigt ist, ist dem ersten Y-Schlittenelement 11 des Basisrahmens 5 ein erster Aufnahmekörper 63 des Transportwagens 1 zur Aufnahme einer ersten Radnabe 65 (Figur 2) der Fahrzeugachse 3 zugeordnet. Dieser Aufnahmekörper 63 ist hier dabei in Transportwagen-Hochrichtung z verlagerbar an dem Y-Schlittenelement 11 des Basisrahmens 5 festgelegt. Hierzu weist das Trägergestell 41 des ersten Y-Schlittenelements 11 hier beispielhaft zwei in Transportwagen-Hochrichtung z ausgerichtete, in Transportwagen-Längsrichtung x voneinander beabstandete Führungsschienen 67 auf, mittels denen der Aufnahmekörper 63 in Transport-Hochrichtung z verlagerbar geführt ist.

Zudem weist der erste Aufnahmekörper 63 hier beispielhaft zwei in Transportwagen-Längsrichtung x nach vorne von dem Aufnahmekörper 63 abragende, in Transportwagen-Hochrichtung z voneinander beabstandete Führungselemente auf, die starr an dem Aufnahmekörper 63 festgelegt sind. Diese beiden Führungselemente ragen in eine innenseitige Vertiefung 71 einer der Führungsschien 67 ein. Zudem weist der Aufnahmekörper 63 hier auch zwei nach hinten abragende Führungselemente auf, die in eine innenseitige Vertiefung 71 der anderen Führungsschiene 67 einragen.

Des Weiteren kann der in Transportwagen-Hochrichtung z verlagerbar an dem ersten Y-Schlittenelement 11 festgelegte erste Aufnahmekörper 63 hier beispielhaft mittels eines Spindeltriebs 75 in Transportwagen-Hochrichtung z relativ zu dem ersten Y-Schlittenelement 11 verlagert werden. Dieser Spindeltrieb 75 weist eine an dem Aufnahmekörper 63 festgelegte Spindelmutter 77 (Figur 1) auf, die mit einer in Transportwagen-Hochrichtung z ausgerichteten Spindel 79 in Eingriff ist. Die Spindel 79 ist axial drehbar an dem Trägergestell 41 des ersten Y-Schlittenelements 11 festgelegt und bildet eine Ausgangswelle eines Winkelgetriebes 81 des ersten Y-Schlittenelements 11 aus.

Das Winkelgetriebe 81 ist über eine in Transportwagen-Querrichtung y ausgerichtete Welle drehmomentübertragend mit einem weiteren Winkelgetriebe 82 (Fig. 5) des ersten Y-Schlittenelements 11 verbunden. Dieses weitere Winkelgetriebe 82 weist als Eingangswelle eine ausgehend von dem Winkelgetriebe 82 nach oben sowie nach außen verlaufende Welle 83 (Fig. 5) auf. Die Welle 83 ist an einer in Transportwagen-Längsrichtung x nach außen abragenden Konsole 86 des Trägergestells 41 des Y-Schlittenelements 11 axial drehbar gehaltert ist und weist an einem freien Ende 84 (Figur 1) einen Steckbereich 85 mit einem Antriebsprofil auf. An diesen Steckbereich 85 kann wiederum der Druckluftschrauber 50 angesteckt werden, so dass die Welle 83 mittels des Druckluftschraubers 50 drehbetätigt werden kann. Durch Drehbetätigung der Welle 83 wird dann die Spindel 79 des Spindeltriebs 75 drehangetrieben. Dies bewirkt eine Verlagerung des ersten Aufnahmekörpern 63 relativ zu dem ersten Y-Schlittenelement 11 in Transportwagen-Hochrichtung z. Die Welle 83 bildet hier somit ein Z-Betätigungselement aus, durch dessen Betätigung der erste Aufnahmekörper 63 relativ zu dem ersten Y-Schlittenelement 11 in Transportwagen-Hochrichtung z bzw. in Vertikalrichtung verlagert wird.

Wie in Figur 1 weiter gezeigt ist, ist dem zweiten Y-Schlittenelement 13 hier beispielhaft ein Stützkörper 87 zugeordnet, der in Transportwagen-Hochrichtung verlagerbar an dem zweiten Y-Schlittenelement 13 festgelegt ist. Dabei weist das zweite Y-Schlittenelement 13 hier beispielhaft ein Trägergestell 90 mit zwei in Transportwagen-Hochrichtung z ausgerichtete, in Transportwagen-Längsrichtung x voneinander beabstandete Führungsschienen 89 auf, mittels denen der Stützkörper 87 in Transportwagen-Hochrichtung z verlagerbar geführt ist. Zudem weist der Stützkörper 87 weist insgesamt vier in den Figuren nicht gezeigte Führungselemente auf, die in innenseitige Vertiefungen 91 der Führungsschienen 89 einragen.

Weiter kann der Stützkörper 87 hier beispielhaft mittels eines Spindeltriebs 93 höhenverstellt bzw. relativ zu dem Y-Schlittenelement 13 in Transportwagen-Hochrichtung z verlagert werden. Dieser Spindeltrieb 93 weist eine an den Stützkörper 87 festgelegte Spindelmutter 95 auf, die mit einer in Transportwagen-Hochrichtung z ausgerichteten Spindel 97 in Eingriff ist. Die Spindel 97 ist an dem Trägergestell 90 des Y-Schlittenelements 13 axial drehbar festgelegt und bildet eine Ausgangswelle eines Winkelgetriebes 99 des zweiten Y-Schlittenelements 13 aus.

Das Winkelgetriebe 99 des zweiten Y-Schlittenelements 13 ist hier dabei drehmomentübertragend mit dem Winkelgetriebe 81 des ersten Y-Schlittenelements 11 verbunden. Diese Verbindung ist hier beispielhaft durch eine Keilwellenverbindung realisiert, bei der eine Keilwelle 101 als Ausgangswelle des Winkelgetriebes 81 in Eingriff mit einem korrespondierenden rohrförmigen Nabenelement 103 ist, dergestalt, dass die Keilwelle 101 und das Nabenelement 103 zueinander axial verschiebbar sind. Auf diese Weise können durch Drehbetätigung der Welle 83 des ersten Y-Schlittenelements 11 der erste Aufnahmekörper 63 des ersten Y-Schlittenelements 11 und der Stützkörper 87 des zweiten Y-Schlittenelements 13 parallel zueinander relativ zu dem Basisrahmen 5 des Transportwagens 1 in Transportwagen-Hochrichtung z verlagert bzw. höhenverstellt werden. Die Keilwelle 101 und das Nabenelement 103 sind hier zudem jeweils über ein Kardangelenk 105 mit dem jeweiligen Winkelgetriebe 81, 99 verbunden, so dass die Winkelgetriebe 81, 99 hier auch über eine Kardanwelle drehmomentübertragend miteinander verbunden sind.

Wie in Figur 1 weiter gezeigt ist, ist dem zweiten Y-Schlittenelement 13 hier auch ein zweiter Aufnahmekörper 107 zur Aufnahme einer zweiten Radnabe 109 (Figur 2) der Fahrzeugachse 3 zugeordnet. Dieser zweite Aufnahmekörper 107 ist ebenfalls in Transportwagen-Hochrichtung z relativ zu dem zweiten Y-Schlittenelement 13 verlagerbar an dem zweiten Y-Schlittenelement 13 festgelegt. Dabei weist der zweite Aufnahmekörper 107 hier ebenfalls insgesamt vier Führungselemente 111 auf, die in außenseitige Vertiefungen 113 der Führungsschiene 89 einragen, so dass der zweite Aufnahmekörper 107 mittels der Führungsschiene 89 in Transportwagen-Hochrichtung z verlagerbar geführt ist. Zudem wird der zweite Aufnahmekörper 107 hier mittels des Stützkörpers 87 in Transportwagen-Hochrichtung z nach unten abgestützt. Auf diese Weise wird bei einer Verlagerung des Stützkörpers 87 nach oben der zweite Aufnahmekörper 107 mittels des Stützkörpers 87 ebenfalls nach oben verlagert und umgekehrt.

Konkret sind der Stützkörper 87 und der zweite Aufnahmekörper 107 hier über einen Hydraulikzylinder 115 miteinander verbunden. Dabei ist eine Kolbenstange 117 (Figur 5) des Hydraulikzylinders 115 mittels einer Schraubverbindung schwenkbar mit dem Stützkörper 89 des zweiten Y-Schlittenelements 13 verbunden. Zudem ist ein Rohrkörper 119 des Hydraulikzylinders 115 starr an dem zweiten Aufnahmekörper 107 des Transportwagens 1 festgelegt. Über eine manuell betätigbare Hydraulikpumpe 120 des zweiten Y-Schlittenelements 13 kann hier zudem der Hydraulikzylinder 115 betätigt werden. Auf diese Weise kann mittels der Hydraulikpumpe 120 und dem Hydraulikzylinder 115 der Abstand zwischen dem Stützkörper 87 und dem zweiten Aufnahmekörper 107 in Transportwagen-Hochrichtung z eingestellt werden bzw. der Aufnahmekörper 107 relativ zu dem Stützkörper 87 in Transportwagen-Hochrichtung z verlagert werden. So kann der zweite Aufnahmekörper des zweiten Y-Schlittenelements 13 in unterschiedlichen Höhenpositionen relativ zu dem ersten Aufnahmekörper 63 des ersten Y-Schlittenelements 11 angeordnet werden.

Wie in Figur 1 weiter gezeigt ist, weisen die Aufnahmekörper 63, 107 des Transportwagens 1 zur Aufnahme der Fahrzeugachse 3 hier jeweils zwei axial drehbar festgelegte Rollen 121 auf, auf denen die jeweilige Radnabe 65, 109 der Fahrzeugachse 3 mit einem daran festgelegten scheibenförmigen Adapterelement 123 (Fig. 2) abgelegt bzw. abgesetzt werden kann. Die zwei Rollen 121 des jeweiligen Aufnahmekörpers 63, 107 sind hier dabei in Transportwagen-Längsrichtung x voneinander beabstandet sowie, in Transportwagen-Hochrichtung z gesehen, auf gleicher Höhe angeordnet.

Jede Rolle 121 weist hier beispielhaft eine umlaufende Ausnehmung 125 auf, in der das an der jeweiligen Radnabe 65, 109 festgelegte scheibenförmige Adapterelement 123 mit einem Scheibenrandbereich angeordnet werden kann. Diese umlaufende Ausnehmung 125 ist hier in Rollen-Axialrichtung beidseitig von radial nach außen abragenden ringförmigen Stegen 127 begrenzt. Mittels dieser Stege 127 wird verhindert, dass sich die auf den Rollen 121 abgelegte Fahrzeugachse 3 in Transportwagen-Querrichtung y relativ zu dem Transportwagen 1 bewegen kann. Zudem sind die Rollen 121 hier derart angeordnet, dass sich die Rollen 121 bei einer axial Drehung der auf den Rollen 121 abgelegten Fahrzeugachse 3 mitdrehen.

Die jeweilige Radnabe 65, 109 kann hier beispielhaft mittels mehrerer Schraubverbindungen mit dem jeweiligen scheibenförmigen Adapterelement 123 verbunden werden. Gemäß Fig. 3 weist hierzu jedes Adapterelement 123 einen, in Radialrichtung gesehen, inneren Lochkreis mit mehreren, hier beispielhaft acht, durchgängigen Bohrungen 124 auf. Über die durchgängigen Bohrungen 124 des jeweiligen Adapterelements 123 und über durch einen Lochkreis der jeweiligen Radnabe 65, 109 gebildete Gewindebohrungen, die auch zur Befestigung eines Fahrzeugrads an der jeweiligen Radnabe 65, 109 verwendet werden, können das jeweilige Adapterelement 123 und die jeweilige Radnabe 65, 109 dabei miteinander verschraubt werden. Des Weiteren weisen die Adapterelemente 123 hier definiert vorgegebenen Außendurchmesser auf. Zudem sind die Adapterelemente 123 hier beispielhaft ringförmig und baugleich bzw. identisch ausgebildet.

Wie weiter in Figur 1 gezeigt ist, weist hier der zweite Aufnahmekörper 107 des Transportwagens 1 zwei in Transportwagen-Längsrichtung x voneinander beabstandete, hier beispielhaft als Buchsen ausgebildete Sicherungselemente 129 auf, mittels denen einem Herunterfallen der auf den Rollen 121 abgelegten Fahrzeugachse 3 von dem Transportwagen entgegengewirkt wird. Diese Buchsen 129 sind, in Transportwagen-Längsrichtung x gesehen, beidseitig außerhalb sowie, in Transportwagen-Hochrichtung z gesehen, oberhalb der beiden Rollen 121 angeordnet. Zudem sind die Buchsen 129 nicht in Anlage mit dem mit der zweiten Radnabe 109 der Fahrzeugachse 3 verbundenen Adapterelement 123, wenn die Fahrzeugachse 3 auf allen Rollen 121 des Transportwagens 1 aufliegt.

Gemäß Fig. 4 weist der zweite Aufnahmekörper 107 des Transportwagens 1 hier weiter auch einen ausfahrbaren Steckbolzen 133 als Verdrehsicherung für die auf den Rollen 121 abgelegte Fahrzeugachse 3 auf. Dieser Steckbolzen 133 kann mit einem definierten Spaltabstand in Ausnehmungen 130 des jeweiligen Adapterelements 123 eingesteckt bzw. eingeführt werden. Diese Ausnehmungen 130 sind hier beispielhaft durch durchgängige Bohrungen eines, in Radialrichtung gesehen, äußeren Lochkreises des jeweiligen Adapterelements 123 gebildet. Der Steckbolzen 133 ist hier in einem Rohrelement 134 geführt, mittels eines Spannelements, beispielsweise mittels einer Feder, in Ausfahrrichtung vorgespannt und kann mittels eines Hebels bzw. Griffs 131 (Fig. 1) manuell betätigt bzw. aus- und eingefahren werden.

Wie weiter in Fig. 1 gezeigt ist, ist dem Aufnahmekörper 63 des ersten Y-Schlittenelements 11 des Basisrahmens 5 auch ein Y-Schlittenelement 135 zugeordnet, das relativ zu dem ersten Aufnahmekörper 63 in Transportwagen-Querrichtung y verlagerbar an dem ersten Aufnahmekörper 63 festgelegt ist. Hierzu weist der Aufnahmekörper 63 zwei in Montagewagen-Querrichtung y ausgerichtete, in Transportwagen-Längsrichtung x voneinander beabstandete Führungsstäbe 137 auf, mittels denen das Y-Schlittenelement 135 relativ zu dem ersten Aufnahmekörper 63 in Transportwagen-Querrichtung y verlagerbar geführt ist. Das Y-Schlittenelement 135 kann hier dabei durch Krafteinsatz eines Werkers in Transportwagen-Querrichtung y verlagert werden.

Das Y-Schlittenelement 135 weist hier eine die Führungsstäbe 137 umgreifende Konsole 139 und eine Dreh-Betätigungseinrichtung 140 auf, mittels der die auf den Rollen 121 abgelegte Fahrzeugachse 3 axial gedreht werden kann. Diese Drehbetätigungseinrichtung 140 weist ein drehantreibbares gabelartiges Steckelement 141 mit zwei abragenden Steckarmen 143 auf. Diese Steckarme 143 können zur Herstellung einer drehmomentübertragenden Verbindung zwischen dem Steckelement 141 und der auf den Rollen 121 abgelegten Fahrzeugachse 3 jeweils mit einem definierten Spaltabstand in eine der Ausnehmungen 130 des an der ersten Radnabe 109 festgelegten Adapterelements 123 eingesteckt bzw. eingeführt werden. Das Steckelement 141 ist hier zudem insgesamt im Wesentlichen Y-förmig ausgebildet. Zudem sind die Steckarme 143 des Steckelements 141 hier jeweils durch einen U-Schenkel eines U-förmigen Steckbereichs 145 des Steckelements 141 gebildet.

Des Weiteren bildet das Steckelement 141 hier eine Ausgangswelle eines Schneckengetriebes 147 des Y-Schlittenelements 135 aus. Dieses Schneckengetriebe 147 ist eingangsseitig über eine Sicherheitskupplung 149 (Fig. 4) und ein Winkelgetriebe 151 drehmomentübertragend mit einer axial drehbar gehalterten Welle 153 des Y-Schlittenelements 135 verbunden. Die Welle 153 weist an einem freien Ende einen Steckbereich mit einem Antriebsprofil auf. An diesen Steckbereich kann wiederum der Druckluftschrauber 50 angesteckt werden, wie auch in den Figuren gezeigt ist. Auf diese Weise kann die Welle 153 mittels des Druckluftschraubers 50 drehbetätigt werden kann. Durch Drehbetätigung der Welle 153 wird dann das Steckelement 141 des Y-Schlittenelements 135 drehangetrieben. Dies bewirkt dann eine axiale Drehung der auf den Rollen 121 abgelegten, drehmomentübertragend mit dem Steckelement 141 verbunden Fahrzeugachse 3. Die Welle 153 bildet hier somit ein Dreh-Betätigungselement aus, durch dessen Betätigung das Steckelement 141 des Y-Schlittenelements 135 drehangetrieben wird.

### Bezugszeichenliste

- 1: Transportwagen
- 3: Fahrzeugachse
- 5: Basisrahmen
- 7: Fahrrolle
- 9: Trägerkörper
- 11: erstes Y-Schlittenelement
- 13: zweites Y-Schlittenelement
- 14: Stopper
- 15: Trägerschiene
- 17: Endbereich
- 19: Führungsschiene
- 21: Trägerschiene
- 23: Führungselement
- 25: Vertiefung
- 27: Trägerschiene
- 28: Führungselement
- 29: Vertiefung
- 31: Spindeltrieb
- 33: Aufnahmeplatte
- 35: Spindelmutter
- 37: Spindel
- 39: Winkelgetriebe
- 41: Trägerstell
- 43: Welle
- 45: Konsole
- 47: freies Ende
- 49: Steckbereich
- 50: Druckluftschrauber
- 51: Kopplungseinrichtung
- 53: Zahnstange
- 55: Stirnrad
- 57: Zahnstange
- 59: Linearskala
- 61: Zeiger
- 63: erster Aufnahmekörper
- 65: erste Radnabe
- 67: Führungsschiene
- 71: Vertiefung
- 75: Spindeltrieb
- 77: Spindelmutter
- 79: Spindel
- 81: Winkelgetriebe
- 82: Winkelgetriebe
- 83: Welle
- 84: freies Ende
- 85: Steckbereich
- 86: Konsole
- 87: Stützkörper
- 89: Führungsschiene
- 90: Trägergestell
- 91: Vertiefung
- 93: Spindeltrieb
- 95: Spindelmutter
- 97: Spindel
- 99: Winkelgetriebe
- 101: Keilwelle
- 103: Nabenelement
- 105: Kardangelenk
- 107: zweiter Aufnahmekörper
- 109: zweite Radnabe
- 111: Führungselement
- 113: Vertiefung
- 115: Hydraulikzylinder
- 117: Kolbenstange
- 119: Rohrkörper
- 120: Hydraulikpumpe
- 121: Rolle
- 123: Adapterelement
- 124: Bohrung
- 125: Ausnehmung
- 127: Steg
- 129: Buchse
- 130: Ausnehmung
- 131: Hebel
- 133: Steckbolzen
- 134: Rohrelement
- 135: Y-Schlittenelement
- 137: Führungsstab
- 139: Konsole
- 140: Dreh-Betätigungseinrichtung
- 141: Steckelement
- 143: Steckarm
- 145: Steckbereich
- 147: Schneckengetriebe
- 149: Sicherheitskupplung
- 151: Winkelgetriebe
- 153: Welle

## Patentansprüche

1. Fahrbarer Transportwagen zum Transport einer Fahrzeugachse, insbesondere einer Nutzfahrzeugachse, mit einer Achsaufnahme (63, 107) zur Aufnahme der Fahrzeugachse (3), und mit einer Betätigungseinrichtung (43, 83, 153), mittels der die aufgenommene Fahrzeugachse (3) relativ zu einem wenigstens eine, insbesondere mehrere, Fahrrolle (7) aufweisenden Basisrahmen (5) des Transportwagens (1) in Transportwagen-Hochrichtung (z) verlagerbar und/oder relativ zu dem Basisrahmen (5) des Transportwagens (1) um wenigstens eine Drehachse, insbesondere um eine in Transportwagen-Querrichtung (y) verlaufende Querachse und/oder um eine in Transportwagen-Längsrichtung (x) verlaufende Längsachse, verdrehbar ist, wobei die Achsaufnahme einen ersten Aufnahmekörper (63) zur Aufnahme einer ersten Radnabe (65) der Fahrzeugachse (3) und einen, insbesondere in Transportwagen-Querrichtung (y) von dem ersten Aufnahmekörper (63) beabstandeten, zweiten Aufnahmekörper (107) zur Aufnahme einer zweiten Radnabe (109) der Fahrzeugachse (3) aufweist,
**dadurch gekennzeichnet,**
*Variante i)* dass jeder Aufnahmekörper (63, 107) mehrere, insbesondere zwei, axial drehbar festgelegte Rollen (121) aufweist, auf denen die jeweilige Radnabe (65, 109) mit einem daran festgelegten scheibenförmigen Adapterelement (123) ablegbar und/oder absetzbar ist, insbesondere dergestalt, dass sich bei einer axialen Drehung der auf den Rollen (121) abgelegten Fahrzeugachse (3) die Rollen (121) mitdrehen;
oder *Variante ii)* dass der erste Aufnahmekörper (63) mittels einer ersten Fixiereinrichtung (67) relativ zu dem Basisrahmen (5) des Transportwagens (1) in Transportwagen-Hochrichtung (z) verlagerbar an dem Basisrahmen (5) festgelegt ist, und dass der zweite Aufnahmekörper (107) mittels einer zweiten Fixiereinrichtung (89) relativ zu dem Basisrahmen (5) des Transportwagens (1) in Transportwagen-Hochrichtung (z) verlagerbar an dem Basisrahmen (5) festgelegt ist;
oder *Variante iii)* dass eine Betätigungseinrichtung (43) vorgesehen ist, mittels der der Abstand der Aufnahmekörper (63, 107) in Transportwagen-Querrichtung (y) einstellbar ist;
oder *Variante iv)* dass der erste Aufnahmekörper (63) einem ersten Y-Schlittenelement (11) des Basisrahmens (5) zugeordnet ist, das mittels einer ersten Verbindungseinrichtung (19, 23) relativ zu einem Trägerkörper (9) des Basisrahmens (5) in Transportwagen-Querrichtung (y) verlagerbar mit dem Trägerkörper (9) verbunden ist, und dass der zweite Aufnahmekörper (107) einem zweiten Y-Schlittenelement (13) des Basisrahmens (5) zugeordnet, das mittels einer zweiten Verbindungseinrichtung (19, 28) relativ zu dem Trägerkörper (9) in Transportwagen-Querrichtung (y) verlagerbar mit dem Trägerkörper (9) verbunden ist.

2. Fahrbarer Transportwagen nach Anspruch 1, **dadurch gekennzeichnet, dass** die aufgenommene Fahrzeugachse (3) mittels der Betätigungseinrichtung (153) axial verdrehbar ist.

3. Fahrbarer Transportwagen nach Anspruch 1 oder 2, **dadurch gekennzeichnet, dass** die Achsaufnahme einen ersten Aufnahmekörper (63) zur Aufnahme einer ersten Radnabe (65) der Fahrzeugachse (3) und einen, insbesondere in Transportwagen-Querrichtung (y) von dem ersten Aufnahmekörper (63) beabstandeten, zweiten Aufnahmekörper (107) zur Aufnahme einer zweiten Radnabe (109) der Fahrzeugachse (3) aufweist.

4. Fahrbarer Transportwagen nach Anspruch 1 gemäß Variante i), **dadurch gekennzeichnet, dass** jede Rolle (121) eine umlaufende Ausnehmung (125) aufweist, in der der das jeweilige scheibenförmige Adapterelement (123) mit einem Scheibenrandbereich anordenbar ist, wobei bevorzugt vorgesehen ist, dass die umlaufende Ausnehmung (125) in Rollen-Axialrichtung beidseitig von radial abragenden, insbesondere ringförmigen, Stegen (127) begrenzt ist.

5. Fahrbarer Transportwagen nach Anspruch 1 gemäß Variante i) oder 4, **dadurch gekennzeichnet, dass** der zweite Aufnahmekörper (107) wenigstens einen ausfahrbaren Steckbolzen (133) als Verdrehsicherung für die auf den Rollen (121) abgelegte Fahrzeugachse (3) aufweist, der, insbesondere mit einem definierten Spaltabstand, in eine korrespondierende Ausnehmung (130) des an der zweiten Radnabe (109) festgelegten Adapterelements (123) einsteckbar und/oder einführbar ist.

6. Fahrbarer Transportwagen nach einem der Ansprüche 1 gemäß Variante i), 4 oder 5, **dadurch gekennzeichnet, dass** dem ersten Aufnahmekörper (63) eine Drehbetätigungseinrichtung (140) zugeordnet ist, mittels der die auf den Rollen (121) abgelegte Fahrzeugachse (3) axial drehbar ist, wobei bevorzugt vorgesehen ist, dass die Drehbetätigungseinrichtung (140) Bestandteil eines Y-Schlittenelements (135) ist, das mittels einer Fixiereinrichtung (137) relativ zu dem ersten Aufnahmekörper (63) in Transportwagen-Querrichtung (y) verlagerbar an dem ersten Aufnahmekörper (63) festgelegt ist.

7. Fahrbarer Transportwagen nach Anspruch 6, **dadurch gekennzeichnet, dass** die Drehbetätigungseinrichtung (140) ein drehantreibbares, insbesondere gabelartiges, Steckelement (141) mit mehreren, insbesondere mit zwei, abragenden Steckarmen (143) aufweist, die zur Herstellung einer drehmomentübertragenden Verbindung zwischen dem Steckelement (141) und der auf den Rollen (121) abgelegten Fahrzeugachse (3), insbesondere mit einem definierten Spaltabstand, in korrespondierende Ausnehmungen (130) des an der ersten Radnabe (65) festgelegten Adapterelements (123) einsteckbar und/oder einführbar sind.

8. Fahrbarer Transportwagen nach Anspruch 7, **dadurch gekennzeichnet, dass** das Steckelement (141) einen im Wesentlichen U-förmigen Steckbereich (145) aufweist, wobei jeder U-Schenkel des U-förmigen Steckbereichs (145) einen abragenden Steckarm (143) des Steckelements (141) ausbildet, wobei bevorzugt vorgesehen ist, dass das Steckelement (141) insgesamt im Wesentlichen Y-förmig ausgebildet ist.

9. Fahrbarer Transportwagen nach Anspruch 7 oder 8, **dadurch gekennzeichnet, dass** die Drehbetätigungseinrichtung (140) ein, insbesondere stabförmiges und/oder axial drehbar festgelegtes, drehmomentübertragend mit dem Steckelement (141) verbundenes Dreh-Betätigungselement (153) aufweist, mittels dem das Steckelement (141) drehantreibbar ist, wobei bevorzugt vorgesehen ist, dass das Dreh-Betätigungselement (153) unter Zwischenschaltung eines Schneckengetriebes (147) mit dem Steckelement (141) gekoppelt ist.

10. Fahrbarer Transportwagen nach Anspruch 1 gemäß Variante ii), **dadurch gekennzeichnet, dass** der zweite Aufnahmekörper (107) mittels eines Stützkörpers (87) in Transportwagen-Hochrichtung (z) nach unten abgestützt ist, wobei der Stützkörper (87) mittels einer Fixiereinrichtung (89) relativ zu dem Basisrahmen (5) des Transportwagens (1) in Transportwagen-Hochrichtung (z) verlagerbar an dem Basisrahmen (5) festgelegt ist, und wobei der Abstand zwischen dem zweiten Aufnahmekörper (107) und dem Stützkörper (87) in Transportwagen-Hochrichtung (z) mittels einer Betätigungseinrichtung (115, 120) einstellbar ist.

11. Fahrbarer Transportwagen nach Anspruch 10, **dadurch gekennzeichnet, dass** der erste Aufnahmekörper (63) und der Stützkörper (87) jeweils mittels eines Spindeltriebs (75, 93) relativ zu dem Basisrahmen (5) des Transportwagens (1) in Transportwagen-Hochrichtung (z) verlagerbar sind, wobei dem ersten Aufnahmekörper (63) und dem Stützkörper (87) eine Spindelmutter (77, 95) des jeweiligen Spindeltriebs (75, 93) zugeordnet ist, wobei bevorzugt vorgesehen ist, dass die Spindeln (79, 97) dieser Spindeltriebe (75, 93) drehmomentübertragend mit einem, insbesondere stabförmigen und/oder axial drehbar festgelegten, Z-Betätigungselement (83) verbunden sind, mittels dem die Spindeln (79, 97) drehantreibbar sind.

12. Fahrbarer Transportwagen nach Anspruch 1 gemäß Varianten iii) und iv) und Anspruch 11, **dadurch gekennzeichnet, dass** das Z-Betätigungselement (83) einem der Y-Schlittenelemente (11) des Basisrahmens (5) zugeordnet ist, und dass die dem anderen Y-Schlittenelement (13) des Basisrahmens (5) zugeordnete Spindel (97) über wenigstens eine Welle-Nabe-Verbindung drehmomentübertragend mit dem Z-Betätigungselement (83) verbunden ist, bei der das Wellenelement (101) und das Nabenelement (103) zueinander axial verschiebbar sind.

13. Fahrbarer Transportwagen nach Anspruch 1 gemäß Varianten iii) und iv) oder Anspruch 12, **dadurch gekennzeichnet, dass** das erste Y-Schlittenelement (11) mittels eines Spindeltriebs (31) relativ zu dem Trägerkörper (9) in Transportwagen-Querrichtung (y) verlagerbar ist, wobei bevorzugt vorgesehen ist, dass eine Spindel (37) dieses Spindeltriebs (31) mittels eines, insbesondere stabförmigen und/oder axial drehbar festgelegten, drehmomentübertragend mit der Spindel (31) verbundenen Y-Betätigungselements (43) drehantreibbar ist.

14. Fahrbarer Transportwagen nach Anspruch 13, **dadurch gekennzeichnet, dass** die Y-Schlittenelemente (11, 13) mittels einer Kopplungseinrichtung (51) miteinander bewegungsgekoppelt sind, dergestalt, dass sich bei einer Verlagerung des ersten Y-Schlittenelements (11) weg von dem Trägerkörper (9) das zweite Y-Schlittenelement (13) ebenfalls von dem Trägerkörper (9) wegverlagert und umgekehrt, wobei bevorzugt vorgesehen ist, dass die Kopplungseinrichtung (51) durch einen Zahnstangentrieb gebildet ist.

15. Fahrbarer Transportwagen nach Anspruch 9, 11 oder 13, **dadurch gekennzeichnet, dass** das Dreh-Betätigungselement (153) und/oder das Z-Betätigungselement (83) und/oder das Y-Betätigungselement (43) einen Steckbereich (49, 85) mit einem Antriebsprofil aufweist, an den ein Druckluftschrauber (50) ansteckbar ist, dergestalt, dass das jeweilige Betätigungselement (153, 83, 43) mittels des Druckluftschraubers (50) drehbetätigbar ist.

16. Verfahren zur Montage eines Fahrzeugs, insbesondere eines Nutzfahrzeugs, mittels eines fahrbaren Transportwagen nach einem der vorhergehenden Ansprüche, wobei zunächst eine sich in einem Ausgangszustand befindliche Fahrzeugachse (3) auf dem Transportwagen (1) abgelegt wird, wobei anschließend an einer ersten Montagestation die abgelegte Fahrzeugachse (3) mittels der Betätigungseinrichtung (153) des Transportwagens (1) in wenigstens eine, insbesondere in mehrere, definierte Axial-Drehposition axial gedreht und wenigstens ein Anbauteil an die in der jeweiligen Axial-Drehposition angeordnete Fahrzeugachse (3) montiert wird, und wobei die derart vormontierte Fahrzeugachse (3) dann mittels des Transportwagens (1) hin zu einer zweiten Montagestation gefahren wird, an der die auf dem Transportwagen (1) abgelegte Fahrzeugachse (3) an einem in Fahrlage angeordneten Fahrgestellrahmen des Fahrzeugs montiert wird.

## Claims

1. Mobile transport carriage for transporting a vehicle axle, in particular a commercial vehicle axle, having an axle receptacle (63, 107) for receiving the vehicle axle (3), and having an actuating device (43, 83, 153) by means of which the received vehicle axle (3) can be displaced in the transport carriage upward direction (z) relative to a base frame (5) of the transport carriage (1), which base frame (5) has at least one, in particular a plurality of, castors (7), and/or can be rotated relative to the base frame (5) of the transport carriage (1) about at least one axis of rotation, in particular about a transverse axis running in the transverse direction (y) of the transport carriage and/or about a longitudinal axis running in the longitudinal direction (x) of the transport carriage, the axle mount having a first receptacle (63) for receiving a first wheel hub (65) of the vehicle axle (3) and a second receptacle (107), in particular spaced apart from the first receptacle (63) in the transverse direction (y) of the transport carriage, for receiving a second wheel hub (109) of the vehicle axle (3),
**characterized in**
variant i) that each receptacle (63, 107) has a plurality of, in particular two, axially rotatably fixed rollers (121) on which the respective wheel hub (65, 109) with a disc-shaped adapter element (123) fixed thereto can be deposited and/or laid, in particular in such a way that the rollers (121) rotate with an axial rotation of the vehicle axle (3) deposited on the rollers (121);
or variant ii) that the first receptacle (63) is fixed to the base frame (5) by means of a first fixing device (67) so as to be displaceable relative to the base frame (5) of the transport carriage (1) in the transport carriage upward direction (z), and **in that** the second receptacle (107) is fixed to the base frame (5) by means of a second fixing device (89) so as to be displaceable relative to the base frame (5) of the transport carriage (1) in the transport carriage upward direction (2);
or variant iii) that an actuating device (43) is provided by means of which the distance between the receptacles (63, 107) can be adjusted in the transverse direction (y) of the transport carriage;
or variant iv) that the first receptacle (63) is assigned to a first Y-slide element (11) of the base frame (5), which is connected to the carrier body (9) by means of a first connecting device (19, 23) such that it can be displaced relative to a carrier body (9) of the base frame (5) in the transverse direction (y) of the transport carriage, and **in that** the second receptacle (107) is assigned to a second Y-slide element (13) of the base frame (5), which is connected to the carrier body (9) by means of a second connecting device (19, 28) such that it can be displaced relative to the carrier body (9) in the transverse direction (y) of the transport carriage.

2. Mobile transport carriage according to claim 1, **characterized in that** the received vehicle axle (3) can be rotated axially by means of the actuating device (153).

3. Mobile transport carriage according to claim 1 or 2, **characterized in that** the axle receptacle has a first receptacle (63) for receiving a first wheel hub (65) of the vehicle axle (3) and a second receptacle (107), in particular spaced apart from the first receptacle (63) in the transverse direction (y) of the transport carriage, for receiving a second wheel hub (109) of the vehicle axle (3).

4. Mobile transport carriage according to claim 1 according to variant i), **characterized in that** each roller (121) has a circumferential recess (125) in which the respective disc-shaped adapter element (123) can be arranged with a disc edge region, wherein preferably it is provided that the circumferential recess (125) is bounded on both sides in the roller axial direction by radially projecting, in particular annular, webs (127).

5. Mobile transport carriage according to claim 1 according to variant i) or 4, **characterized in that** the second receptacle (107) has at least one extendable plug-in bolt (133) as an anti-rotation device for the vehicle axle (3) deposited on the rollers (121), which bolt can be inserted and/or introduced, in particular with a defined gap spacing, into a corresponding recess (130) of the adapter element (123) fixed to the second wheel hub (109).

6. Mobile transport carriage according to one of the claims 1 according to variant i), 4 or 5, **characterized in that** the first receptacle (63) is assigned a rotary actuating device (140) by means of which the vehicle axle (3) deposited on the rollers (121) can be rotated axially, wherein preferably it is provided that the rotary actuating device (140) is part of a Y-slide element (135) which is fixed to the first receptacle (63) such that it can be displaced relative to the first receptacle (63) in the transverse direction (y) of the transport carriage by means of a fixing device (137).

7. Mobile transport carriage according to claim 6, **characterized in that** the rotary actuating device (140) has a rotatably drivable, in particular fork-like, plug-in element (141) with a plurality of, in particular two, projecting plug-in arms (143), which can be inserted and/or introduced into corresponding recesses (130) of the adapter element (123) fixed to the first wheel hub (65), in particular with a defined gap spacing, in order to produce a torque-transmitting connection between the plug-in element (141) and the vehicle axle (3) deposited on the rollers (121).

8. Mobile transport carriage according to claim 7, **characterized in that** the plug member (141) comprises a substantially U-shaped plug portion (145), wherein each U-leg of the U-shaped plug portion (145) forms a projecting plug arm (143) of the plug member (141), preferably providing that the plug member (141) is substantially Y-shaped as a whole.

9. Mobile transport carriage according to claim 7 or 8, **characterized in that** the rotary actuating device (140) has a rotary actuating element (153), in particular a rod-shaped and/or axially rotatably fixed rotary actuating element (153), which is connected to the plug-in element (141) in a torque-transmitting manner and by means of which the plug-in element (141) can be driven in rotation, wherein preferably it is provided that the rotary actuating element (153) is coupled to the plug-in element (141) with the interposition of a worm gear (147).

10. Mobile transport carriage according to claim 1 according to variant ii), **characterized in that** the second receptacle (107) is supported downwardly in the transport carriage upward direction (z) by means of a supporting body (87), wherein the support body (87) is displaceably fixed to the base frame (5) of the transport carriage (1) in the transport carriage upward direction (z) by means of a fixing device (89), and wherein the distance between the second receptacle (107) and the support body (87) is adjustable in the transport carriage upward direction (2) by means of an actuating device (115, 120).

11. Mobile transport carriage according to claim 10, **characterized in that** the first receptacle (63) and the support body (87) can each be displaced relative to the base frame (5) of the transport carriage (1) in the transport carriage upward direction (z) by means of a spindle drive (75, 93), wherein the first receptacle (63) and the support body (87) being assigned a spindle nut (77, 95) of the respective spindle drive (75, 93), wherein preferably it is provided that the spindles (79, 97) of these spindle drives (75, 93) are connected in a torque-transmitting manner to a Z-actuating element (83), in particular a rod-shaped and/or axially rotatably fixed Z-actuating element (83), by means of which the spindles (79, 97) can be driven in rotation.

12. Mobile transport carriage according to claim 1 according to variants iii) and iv) and claim 11, **characterized in that** the Z-actuating element (83) is associated with one of the Y-slide elements (11) of the base frame (5), and **in that** the spindle (97) associated with the other Y-slide element (13) of the base frame (5) is connected to the Z-actuating element (83) in a torque-transmitting manner via at least one shaft-hub connection, in which the shaft element (101) and the hub element (103) are axially displaceable relative to one another.

13. Mobile transport carriage according to claim 1 according to variants iii) and iv) or claim 12, **characterized in that** the first Y-slide element (11) is displaceable by means of a spindle drive (31) relative to the carrier body (9) in the transverse direction (y) of the transport carriage, wherein preferably it is provided that a spindle (37) of this spindle drive (31) is rotatably drivable by means of a Y-actuating element (43) which is fixed, in particular in the form of a rod and/or axially rotatably, and is connected to the spindle (31) in a torque-transmitting manner.

14. Mobile transport carriage according to claim 13, **characterized in that** the Y-slide elements (11, 13) are motion-coupled to one another by means of a coupling device (51) in such a way that, in the event of a displacement of the first Y-slide element (11) away from the carrier body (9), the second Y-slide element (13) likewise displaces away from the carrier body (9) and vice versa, wherein preferably it is provided that the coupling device (51) is formed by a rack-and-pinion drive.

15. Mobile transport carriage according to claim 9, 11 or 13, **characterized in that** the rotary actuating element (153) and/or the Z-actuating element (83) and/or the Y-actuating element (43) has a plug-in area (49, 85) with a drive profile to which a pneumatic screwdriver (50) can be plugged, in such a way that the respective actuating element (153, 83, 43) can be rotationally actuated by means of the pneumatic screwdriver (50).

16. Method for assembling a vehicle, in particular a commercial vehicle, by means of a mobile transport carriage according to one of the preceding claims, wherein at first a vehicle axle (3) located in an initial state is deposited on the transport carriage (1), wherein subsequently at a first assembly station the deposited vehicle axle (3) is axially rotated by means of the actuating device (153) of the transport carriage (1) into at least one, in particular into a plurality of, defined axial rotary positions and at least one add-on part is mounted on the vehicle axle (3) arranged in the respective axial rotary position, and wherein the vehicle axle (3) pre-mounted in this way then is moved by means of the transport carriage (1) to a second assembly station, at which the vehicle axle (3) deposited on the transport carriage (1) is mounted on a chassis frame of the vehicle arranged in the driving position.

## Revendications

1. Chariot de transport mobile pour le transport d'un essieu de véhicule, notamment d'un essieu de véhicule utilitaire, avec un logement d'essieu (63, 107) pour recevoir l'essieu de véhicule (3) et avec un dispositif d'actionnement (43, 83, 153), au moyen duquel l'essieu de véhicule (3) reçu peut être déplacé par rapport à un cadre de base (5) du chariot de transport (1) présentant au moins un, notamment plusieurs galets de roulement (7), dans la direction verticale du chariot de transport (z) et/ou peut être tourné par rapport au cadre de base (5) du chariot de transport (1) autour d'au moins un axe de rotation, notamment autour d'un axe transversal s'étendant dans la direction transversale du chariot de transport (y) et/ou autour d'un axe longitudinal s'étendant dans la direction longitudinale du chariot de transport (x), le logement d'essieu présentant un premier corps de logement (63) pour recevoir un premier moyeu de roue (65) de l'essieu de véhicule (3) et un deuxième corps de logement (64), notamment espacé du premier corps de logement (63) dans la direction transversale du chariot de transport (y), pour recevoir un deuxième moyeu de roue (65) de l'essieu de véhicule (3),
**caractérisé**
*variante i)* en ce que chaque corps de logement (63, 107) présente plusieurs, notamment deux, galets (121) fixés de manière à pouvoir tourner axialement, sur lesquels le moyeu de roue (65, 109) respectif peut être déposé et/ou placé avec un élément d'adaptation (123) en forme de disque fixé sur celui-ci, notamment de telle sorte que lors d'une rotation axiale de l'essieu de véhicule (3) déposé sur les galets (121), les galets (121) tournent également ;
ou *variante ii)* en ce que le premier corps de logement (63) est fixé sur le cadre de base (5) au moyen d'un premier dispositif de fixation (67) de manière à pouvoir être déplacé par rapport au cadre de base (5) du chariot de transport (1) dans la direction verticale du chariot de transport (z), et en ce que le deuxième corps de logement (107) est fixé sur le cadre de base (5) au moyen d'un deuxième dispositif de fixation (89) de manière à pouvoir être déplacé par rapport au cadre de base (5) du chariot de transport (1) dans la direction verticale du chariot de transport (z) ;
ou *variante iii)* en ce qu'un dispositif d'actionnement (43) est prévu, au moyen duquel la distance des corps de logement (63, 107) peut être réglée dans la direction transversale du chariot de transport (y) ;
ou *variante iv)* en ce que le premier corps de logement (63) est associé à un premier élément de coulisseau en Y (11) du cadre de base (5), qui est relié au moyen d'un premier dispositif de liaison (19, 23) à un corps de support (9) du cadre de base (5) de manière à pouvoir être déplacé par rapport au corps de support (9) dans la direction transversale du chariot de transport (y), et en ce que le deuxième corps de logement (107) est associé à un deuxième élément de coulisseau en Y (13) du cadre de base (5), qui est relié au corps de support (9) au moyen d'un deuxième dispositif de liaison (19, 28) de manière à pouvoir être déplacé par rapport au corps de support (9) dans la direction transversale du chariot de transport (y).

2. Chariot de transport mobile selon la revendication 1, **caractérisé en ce que** l'essieu de véhicule (3) reçu peut être tourné axialement au moyen du dispositif d'actionnement (153).

3. Chariot de transport mobile selon la revendication 1 ou 2, **caractérisé en ce que** le logement d'essieu présente un premier corps de logement (63) pour recevoir un premier moyeu de roue (65) de l'essieu de véhicule (3) et un deuxième corps de logement (107), notamment espacé du premier corps de logement (63) dans la direction transversale (y) du chariot de transport, pour recevoir un deuxième moyeu de roue (109) de l'essieu de véhicule (3) .

4. Chariot de transport mobile selon la revendication 1 selon la variante i), **caractérisé en ce que** chaque galet (121) présente un évidement périphérique (125) dans lequel l'élément d'adaptation (123) en forme de disque respectif peut être agencé avec une zone de bord de disque, il étant de préférence prévu que l'évidement périphérique (125) est délimité des deux côtés dans la direction axiale du galet par des entretoises (127) en saillie radiale, notamment annulaires.

5. Chariot de transport mobile selon la revendication 1 selon variante i) ou 4, **caractérisé en ce que** le deuxième corps de logement (107) présente au moins un axe enfichable (133) déployable en tant que blocage en rotation pour l'essieu de véhicule (3) déposé sur les galets (121), qui peut être enfiché et/ou introduit, notamment avec un écartement défini, dans un évidement (130) correspondant de l'élément d'adaptation (123) fixé sur le deuxième moyeu de roue (109).

6. Chariot de transport mobile selon l'une quelconque des revendications 1 selon la variante i), 4 ou 5, **caractérisé en ce qu**'un dispositif d'actionnement en rotation (140) est associé au premier corps de logement (63), au moyen duquel l'essieu de véhicule (3) déposé sur les galets (121) peut être tourné axialement, il étant de préférence prévu que le dispositif d'actionnement en rotation (140) fait partie d'un élément de coulisseau en Y (135) qui est fixé sur le premier corps de logement (63) au moyen d'un dispositif de fixation (137) de manière à pouvoir être déplacé par rapport au premier corps de logement (63) dans la direction transversale du chariot de transport (y).

7. Chariot de transport mobile selon la revendication 6, **caractérisé en ce que** le dispositif d'actionnement en rotation (140) présente un élément enfichable (141) pouvant être entraîné en rotation, notamment de type fourche, avec plusieurs, notamment deux, bras enfichables (143) en saillie, qui, pour établir une liaison transmettant le couple de rotation entre l'élément enfichable (141) et l'essieu de véhicule (3) déposé sur les galets (121), peuvent être enfichés et/ou introduits, notamment avec un écartement défini, dans des évidements (130) correspondants de l'élément adaptateur (123) fixé sur le premier moyeu de roue (65).

8. Chariot de transport mobile selon la revendication 7, **caractérisé en ce que** l'élément enfichable (141) présente une zone d'enfichage (145) essentiellement en forme de U, chaque branche du U de la zone d'enfichage (145) en forme de U formant un bras enfichable (143) en saillie de l'élément enfichable (141), il étant de préférence prévu que l'élément enfichable (141) est globalement réalisé essentiellement en forme de Y.

9. Chariot de transport mobile selon la revendication 7 ou 8, **caractérisé en ce que** le dispositif d'actionnement en rotation (140) présente un élément d'actionnement en rotation (153), notamment en forme de tige et/ou fixé de manière à pouvoir tourner axialement, relié à l'élément enfichable (141) de manière à transmettre le couple de rotation, au moyen duquel l'élément enfichable (141) peut être entraîné en rotation, il étant de préférence prévu que l'élément d'actionnement en rotation (153) est couplé à l'élément enfichable (141) avec interposition d'un engrenage à vis sans fin (147).

10. Chariot de transport mobile selon la revendication 1 selon la variante ii), **caractérisé en ce que** le deuxième corps de logement (107) est soutenu vers le bas dans la direction verticale du chariot de transport (z) au moyen d'un corps de soutien (87), le corps de soutien (87) étant fixé sur le cadre de base (5) au moyen d'un dispositif de fixation (89) de manière à pouvoir être déplacé par rapport au cadre de base (5) du chariot de transport (1) dans la direction verticale du chariot de transport (z), et la distance entre le deuxième corps de logement (107) et le corps de soutien (87) dans la direction verticale du chariot de transport (z) pouvant être réglée au moyen d'un dispositif d'actionnement (115, 120) .

11. Chariot de transport mobile selon la revendication 10, **caractérisé en ce que** le premier corps de logement (63) et le corps de soutien (87) peuvent être déplacés chacun par rapport au cadre de base (5) du chariot de transport (1) dans la direction verticale du chariot de transport (z) au moyen d'un mécanisme à broche (75, 93), le premier corps de logement (63) et le corps de soutien (87) étant associés à un écrou de broche (77, 95) du mécanisme à broche respectif (75, 93), il étant de préférence prévu que les broches (79, 97) de ces mécanismes à broche (75, 93) sont reliées, en transmettant le couple de rotation, à un élément d'actionnement en Z (83), notamment en forme de tige et/ou fixé de manière à pouvoir tourner axialement, au moyen duquel les broches (79, 97) peuvent être entraînées en rotation.

12. Chariot de transport mobile selon la revendication 1, selon les variantes iii) et iv), et la revendication 11, **caractérisé en ce que** l'élément d'actionnement en Z (83) est associé à l'un des éléments de chariot en Y (11) du cadre de base (5), et **en ce que** la broche (97) associée à l'autre élément de coulisseau Y (13) du cadre de base (5) est reliée à l'élément d'actionnement en Z (83) par l'intermédiaire d'au moins une liaison arbre-moyeu en transmettant le couple de rotation, dans laquelle l'élément d'arbre (101) et l'élément de moyeu (103) peuvent être coulissés axialement l'un par rapport à l'autre.

13. Chariot de transport mobile selon la revendication 1, selon les variantes iii) et iv), ou revendication 12, **caractérisé en ce que** le premier élément de coulisseau en Y (11) peut être déplacé par rapport au corps de support (9) dans la direction transversale du chariot de transport (y) au moyen d'un mécanisme à broche (31), il étant de préférence prévu qu'une broche (37) de ce mécanisme à broche (31) peut être entraînée en rotation au moyen d'un élément d'actionnement en Y (43), notamment en forme de tige et/ou fixé de manière à pouvoir tourner axialement, relié à la broche (31) en transmettant le couple de rotation.

14. Chariot de transport mobile selon la revendication 13, **caractérisé en ce que** les éléments de chariot en Y (11, 13) sont couplés en mouvement l'un à l'autre au moyen d'un dispositif de couplage (51), de telle sorte que lors d'un déplacement du premier élément de coulisseau en Y (11) à distance du corps de support (9), le deuxième élément de coulisseau en Y (13) est également déplacé à distance du corps de support (9) et inversement, il étant de préférence prévu que le dispositif de couplage (51) est formé par un mécanisme à crémaillère.

15. Chariot de transport mobile selon la revendication 9, 11 ou 13, **caractérisé en ce que** l'élément d'actionnement en rotation (153) et/ou l'élément d'actionnement en Z (83) et/ou l'élément d'actionnement en Y (43) présentent une zone d'enfichage (49, 85) avec un profil d'entraînement, sur lequel une visseuse pneumatique (50) peut être enfichée, de telle sorte que l'élément d'actionnement respectif (153, 83, 43) peut être actionné en rotation au moyen de la visseuse pneumatique (50).

16. Procédé de montage d'un véhicule, notamment d'un véhicule utilitaire, au moyen d'un chariot de transport mobile selon l'une quelconque des revendications précédentes, dans lequel, tout d'abord, un essieu de véhicule (3) se trouvant dans un état initial est déposé sur le chariot de transport (1), dans lequel, ensuite, à un premier poste de montage, l'essieu de véhicule (3) déposé est tourné axialement dans au moins une, notamment dans plusieurs, positions de rotation axiale définies, au moyen du dispositif d'actionnement (153) du chariot de transport (1), et au moins une pièce rapportée est montée sur l'essieu de véhicule (3) agencé dans la position de rotation axiale respective, et dans lequel l'essieu de véhicule (3) ainsi prémonté est ensuite déplacé au moyen du chariot de transport (1) vers un deuxième poste de montage, dans lequel l'essieu de véhicule (3) déposé sur le chariot de transport (1) est monté sur un cadre de châssis du véhicule agencé en position de marche.
